# EUROPÄISCHE PATENTSCHRIFT

(11) **EP 2 004 351 B1**
(45) Veröffentlichungstag und Bekanntmachung des Hinweises auf die Patenterteilung: **13.07.2011**
(21) Anmeldenummer: 07724059.6
(22) Anmeldetag: 05.04.2007
(51) Int. Cl.: B23B 31/107, B23B 31/117, B23B 31/20

(54) **AUSZUGSSICHERUNG VON WERKZEUGEN AUS WERKZEUGHALTERN MIT EINER WERKZEUGAUFNAHME**
MEANS FOR PREVENTING TOOLS FROM BEING PULLED OUT FROM TOOL HOLDERS WITH A TOOL HOLDING FIXTURE
SECURITE ANTI-EXTRACTION D'OUTILS DE PORTE-OUTILS MUNIS D'UN ATTACHEMENT D'OUTIL

(30) Priorität: 10.04.2006 DE 102006016784; 19.06.2006 DE 102006028408
(43) Veröffentlichungstag der Anmeldung: 24.12.2008
(60) Teilanmeldung: 11158389.4
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Bockhorni, Josef
(86) Internationale Anmeldenummer: PCT/EP2007/003118
(87) Internationale Veröffentlichungsnummer: WO 2007/118626

(56) Entgegenhaltungen:
- EP-A- 1 029 620
- JP-A- 2002 355 727
- US-A- 4 377 292
- US-A- 5 234 296
- US-A1- 2005 238 451

## Beschreibung

Die vorliegende Erfindung betrifft ein System gemäß dem Oberbegriff des Anspruchs 1.

Werkzeughalter mit Spannfuttern, insbesondere Schrumpffuttern sind vielfältig bekannt. Sie dienen dem Einspannen von Rohr-, Dreh-, Fräs-, Reib- und Schleifwerkzeugen o. dgl. über einen thermisch bedingten Schrumpfvorgang. Üblicherweise werden solche Schrumpffutter durch eine induktive Schrumpfanlage thermisch erhitzt, wodurch sich der Innendurchmesser des Schrumpffutters vergrößert. Bei vergrößertem Innendurchmesser wird ein einzuspannendes Werkzeug in das Schrumpffutter eingesetzt, wobei das Verhältnis des Innendurchmessers des Schrumpffutters zum Schaftdurchmesser des Werkzeugs derart ausgelegt ist, dass beim anschließenden Abkühlen des Schrumpffutters das Werkzeug mit dem Schrumpffutter drehmomentfest verspannt ist.

Aus der WO 01/89758 A1 ist es bekannt, den Hülsenabschnitt mittels einer dem Hülsenabschnitt im Wesentlichen gleichachsig umschließenden, ringförmigen Spulenanordnung auf induktivem Wege zu erwärmen. Die Spulenanordnung ist an einen Hochfrequenz-Wechselstromgenerator angeschlossen und induziert in dem metallischen Hülsenabschnitt Wirbelströme, die den Hülsenabschnitt erwärmen. An den Stirnseiten und am Außenumfang der Spulenanordnung sind zur Vermeidung von Streuflüssen und zur Konzentration des Magnetflusses Magnetfluss-Konzentratorelemente aus weichmagnetischem, elektrisch im Wesentlichen nichtleitendem Material, wie z. B. Ferrit o. dgl. angeordnet, die den von der Spulenanordnung erzeugten Magnetfluss auf den Hülsenabschnitt des Werkzeughalters und insbesondere in den Bereich des freien Endes des Hülsenabschnittes lenken.

Das Problem bei Werkzeughaltern mit Spannfuttern für Rotationswerkzeuge, die einen zylindrischen Aufnahmeschaft aufweisen, ist das axiale Auswandern des Rotationswerkzeugs längs der Drehachse des Spannfutters während des Betriebs. Diese axiale Auswanderung des Rotationswerkzeugs ist bedingt durch Schwingungen, die während der Bearbeitung des Werkstücks mit dem Rotationswerkzeug auftreten. Aufgrund dieses nachteiligen Effekts können die Werkstücke nicht mehr präzise und Maßhaltig bearbeitet werden. Ferner könnte ein Verkanten des Rotationswerkzeugs im Werkstück oder sogar in dem Werkstück aufnehmenden Spannfutter zu gefährlichen Unfällen führen. Unter ungünstigen Bedingungen könnte sogar im Grenzfall das Rotationswerkzeug das Spannfutter des Werkzeughalters im Betrieb verlassen und so zu einer großen Gefahr für den Maschinenbediener werden.

Aus der US 2005/0238451, die dem Oberbegriff von Anspruch 1 zugrundeliegt, ist ein gattungsgemäßes System mit einer Ausszugssicherung bekannt, bei der am Schaft eine nutartige Abflachung vorgesehen ist, die mit einem Sperrelement am Werkzeughalter zusammenwirkt.

Aufgabe der vorliegenden Erfindung ist es deshalb, ein System aus Werkzeug und Werkzeughalter mit Spannfutter, insbesondere Schrumpffutter oder dgl. zur Verfügung zu stellen, bei welchem ein axiales Auswandern des Rotationswerkzeugs, wie Rundbohrer, Profilbohrer, Schraubbohrer inkl. Gewindebohrer, Plansenker, Fräser usw., während des Betriebs nicht möglich ist, sondern das Rotationswerkzeug sowohl drehmomentfest als auch axial bezüglich der Drehachse festgehalten wird ohne auszuwandern, wobei die axiale Einstecktiefe des Werkzeugs in einfacher Weise einstellbar sein soll.

Diese Aufgabe wird erfindungsgemäß durch die kennzeichnenden Merkmale des Anspruchs 1 gelöst, wobei zweckmäßigerweise Weiterbildungen der Erfindung durch die Merkmale in den Unteransprüchen geschaffen werden.

Nach Maßgabe der Erfindung weist ein erfindungsgemäßes System eine Auszugssicherung des Werkzeugs auf, welches ein axiales Auswandern des Werkzeugs aus der Werkzeugaufnahme verhindert. Dabei umfasst die Auszugssicherungseinrichtung mindestens ein Sperrelement und mindestens eine dazu korrespondierende und das Sperrelement aufnehmende Sperrnut, welche formschlüssig zusammenwirken, wobei der Sperrnutverlauf zumindest eilweise aus Schrauben- oder kurvenförmigen Zylinderflachenbahnen ausgebildet ist. Dabei sind das Sperrelement und die Sperrnut zumindest teilkugelkopfartig ausgebildet, wobei entweder das Spannfutter die Sperrelemente und das Werkzeug die Sperrnute aufweist oder umgekehrt. Im Übrigen können dabei die Sperrnute, welche sich entweder stirnseitig beginnenden am Werkzeugschaft oder im Werkzeughalter befinden, erweitert bzgl. der Nutbreite ausgeführt sein, um so ein leichteres Einsetzen des Werkzeugs im Werkzeughalter zu ermöglichen.

In einer besonders bevorzugten Ausführungsform weist der Werkzeughalter werkzeughalterseitig mindestens zwei drehbar gelagerte Kugeln auf, wobei rotationswerkzeugseitig mindestens zwei zu den Kugeln korrespondierenden Sperrnuten am Rotationswerkzeugschaft formschlüssig zusammenwirken. Die beiden Sperrnuten sind dabei vorzugsweise gewindeartig am zylindrischen Werkzeugschaft, beginnend an der Stirnseite des Zylinderschafts entlang der Umfangsfläche des Zylinderschafts, angeordnet. Diese auf der Umfangsfläche des Zylinderschafts des Rotationswerkzeugs liegenden Sperrnute liegen bei linksgenuteten Werkzeugen linkssteigend und bei rechtsgenuteten Rotationswerkzeugen rechtssteigend vor. Dabei können die Sperrnute auch axial und damit parallel zur Rotationsachse ausgebildet sein, wodurch dies immer noch als Verdrehsicherung für das Werkzeug wirkt.

Zum Einspannen des erfindungsgemäßen Rotationswerkzeugs wie Rundbohrer, Profilbohrer, Schraubbohrer inkl. Gewindebohrer, Plansenker, Fräser, Aufnahmedorne für weitere Werkzeuge usw., in das erfindungsgemäße Spannfutter, bspw. Schrumpffutter des Werkzeughalters, wird beim Schrumpffutter zunächst die Induktionsspule eingeschaltet, d. h. die Induktionsspule wird unter Hochfrequenz-Wechselstrom gesetzt. Aufgrund der auftretenden Wirbelströme im Hülsenabschnitt des Werkzeughalters, erzeugt durch Induktion aus der dem Werkzeughalter umgebenden Spule, wird der Hülsenabschnitt rasch erwärmt, so dass dieser sich thermisch ausdehnt und so der Innendurchmesser der Aufnahmeöffnung vergrößert wird. Das Rotationswerkzeug kann nun schaftseitig in die Aufnahmeöffnung eingeführt werden. Die Stirnseite des Rotationswerkzeugs gelangt dabei an die in den Innenraum der Aufnahmeöffnung hineinragenden Kugeln und schlägt dort an. Je nach Steigungsrichtung der Sperrnute des Rotationswerkzeugs wird nun dieses linksrum oder rechtsrum bezüglich der Drehachse gedreht, so dass die Kugeln in die kugelförmigen Nuten eingreifen können. Das weitere Drehen erzwingt nun ein schraubenförmiges Eindrehen und damit eine axiale Einzugsbewegung des Rotationswerkzeugs in das Schrumpffutter oder dgl., bis die Stirnseite des zylindrischen Schafts im Spannfutter anschlägt bzw. bis die Kugeln in den kugelförmigen Sperrnuten ihre Endlage erreicht haben. Die Induktionsspule kann nun ausgeschaltet werden. Aufgrund der nun einsetzenden raschen Abkühlung schrumpft das Schrumpffutter wieder auf seine ursprüngliche Größe zurück, wodurch der zylindrische Schaft drehmomentfest mit seiner Umfangsfläche mit der Innenumfangsfläche der Aufnahmeöffnung des Schrumpffutters mit Presssitz verbunden wird. Da die Drehrichtung der Sperrnuten der Drehrichtung der Rotationswerkzeuge entsprechen, kann beim Betrieb des Werkzeugs auch unter starker Belastung, d. h. bei hoher Schnittfestigkeit des Werkstücks und großem Vorschub des Werkzeugs bzw. des Werkzeugtisches, ein axiales Auswandern des Rotationswerkzeugs entlang der Drehachse nicht mehr auftreten. Durch das Zusammenwirken der Kugeln im Werkzeughalter mit den kugelprofilförmigen Sperrnuten im Werkzeugschaft und der gewindeartigen Ausführung dieser Sperrnuten, wird eine axiale Verriegelung erzeugt. Diese axiale Verriegelung kann nur dadurch aufgehoben werden, indem das Rotationswerkzeug in entgegen gesetzter Richtung zur Arbeitsdrehrichtung des Rotationswerkzeug gedreht wird und dabei gleichzeitig aus dem Spannfutter hinausgezogen wird. Eine entgegen der Arbeitsrichtung des Rotationswerkzeugs durchgeführte Drehung ist im Betrieb, also bei der Bearbeitung eines Werkstücks durch das Rotationswerkzeug aber nicht möglich. Ferner ist diese Drehbewegung aufgrund des drehmomentfesten Presssitzes während des Betriebs auch nicht möglich. Somit kann sich das Rotationswerkzeug auch nicht axial aus dem Schrumpffutter oder dgl. hinausbewegen.

Dadurch bleibt die Bearbeitung präzise und die Maßhaltigkeit kann innerhalb der geforderten Toleranzen beibehalten werden. Da ein axiales Auswandern durch die vorliegende Erfindung vermieden wird, kann somit effizient und kostensparend produziert werden, da sehr wenig Ausschuss im Vergleich zu herkömmlichen Werkzeughaltern mit Spannfuttern produziert wird. Auch ist damit eine weitere Unfallquelle und somit die Unfallgefahr für den Maschinenbediener ausgeschlossen.

An Stelle der im Spannfutter drehbar pressgelagerten Kugeln können auch Zylinderstifte mit einer Teil- bzw. Halbkugel an einer der Stirnseiten verwendet werden. Diese liegen anstelle der Kugeln in der Lagerbohrung, wobei diese beispielsweise entweder einen hinauskragenden Vorsprung benötigen, damit der Zylinderstift nicht in den Innenraum der Aufnahmeöffnung hineinfällt, oder ein Außengewinde, das korrespondierend zum Innengwinde der Lagerbohrung ist. Die Verwendung von Kugeln hat gegenüber der Verwendung von Zylinderstiften mit Teil- bzw. Halbkugelkopf den Vorteil, dass das Einführen des Rotationswerkzeugs im Vergleich zu Zylinderstiften leichter ist, da die Kugeln drehbar gelagert sind und im Vergleich zu dem Z-ylinderschaft nicht verkannten können. Auch können Kugeln in der jeweiligen Lagerbohrung unter Verwendung eines Gewindestiftes gehalten werden. Dabei weist der Zylinderstift selbst an seiner Stirnseite eine die Kugel aufnehmende Ausbildung auf, bspw. in Form einer polygonalen Ausnehmung oder einer kugelförmigen Einbauchung o. dgl.. Anstelle des Gewindestifts können auch Passstifte, Bolzen o. dgl. verwendet werden.

Das erfindungsgemäße System, ist insbesondere geeignet für Spannfutter, wie Spannzangenfutter, HG-Futter, Hydrodehnspannfutter und Schrumpffutter.

In zweckmäßigerweise sind je nach Anforderung die Sperrnute in den Umfangsflächen des Schafts des Werkzeugs unterschiedlich ausgebildet. Dabei können die Sperrnute von der Stirnseite aus beginnend einen unterschiedlichen Sperrnutverlauf aufweisen. Dieser kann schraubenförmig, L-förmig, kurvenförmig oder aus zusammengesetzten abschnittsweise gradlinigen und/oder kurvenförmigen Zylinderflächenbahnen gebildet sein. Insbesondere bei einem schraubenförmigen Sperrnutverlauf muss der Drehsinn dem Drehsinn des genuteten Werkzeugs entsprechen. D. h. bei links genutetem Werkzeug muss die schraubenförmige Sperrnut links steigend, bei rechts genutetem Werkzeug hingegen rechtssteigend gebildet sein. Daher erfolgt auch eine Sperrwirkung der Auszugssicherung.

In einer weiteren Ausführungsform weist der Schaft des Werkzeugs endseitig ein Außengewinde auf und die Werkzeugaufnahme des Werkzeughalters ein dazu korrespondierendes Innengewinde. In diesem Fall erfolgt die Auszugssicherung unter Verwendung des Außengewindes am Werkzeug, welches linkssteigend bei linksgenutetem Werkzeug und rechtssteigend bei rechts genutetem Werkzeug ausgebildet ist. In dieser Ausführungsform werden Sperrelemente und Sperrnute obsolet.

In einer besonders bevorzugten Ausführungsform sind die Lagerbohrungen, welche die Sperrelemente aufnehmen, vorzugsweise durchgängig von der Außenumfangsfläche des Werkzeughalters bis in den in das Werkzeug aufnehmenden Innenraum des Werkzeughalters ausgebildet. Dabei können diese Lagerbohrungen senkrecht zur Rotationsachse des Werkzeughalters und die Rotationsachse schneidend gebildet sein und/oder tangential angrenzend an die innere Umfangsfläche des Werkzeug aufnehmenden Innenraums gebildet sein. Vorzugsweise sind die Längsachsen der Lagerbohrungen zueinander gleichwinkelig und insbesondere in einer Ebene senkrecht zur Drehachse des Werkzeugs angeordnet.

In einer weiteren besonders bevorzugten Ausführungsform, insbesondere für Werkzeughalter mit Schrumpffutter, sind die Kugeln als Sperrelemente in einem Kugelkäfig gelagert. Dabei weisen die Lagerbohrungen für die jeweiligen Kugeln im Kugelkäfig bezüglich der Innenumfangsfläche jeweils einen kleineren Bohrungsdurchmesser auf, als der Lagerbohrungsdurchmesser. Dadurch können die Kugeln nicht nach innen in den Innenraum des Werkzeughalters fallen, sondern überkragen lediglich den Innenbereich des Kugelkäfigs. Der Kugelkäfig kann dabei entweder als separates Bauteil formschlüssig in den Innenraum des Werkzeughalters eingefügt sein, oder in einer Hülse eingearbeitet sein. Dabei weist die Hülse die jeweiligen Lagerbohrungen mit den bzgl. zum Innenraum liegenden kleineren Lagerbohrungsdurchmessern auf. Die Hülse kann dabei in den Innenraum der Werkzeugaufnahme eingepresst , eingeschrumpft, mit dem Werkzeughalter verschweißt, mit zusätzlichen Gewindestiften formschlüssig gehalten und/oder mit Sperrelementen und Sperrnuten an der Hülse, wie sie erfindungsgemäß an dem Schaft von Rotationswerkzeugen beschrieben wurden, fixiert werden.

In einer besonders bevorzugten Ausführungsform, insbesondere für Schrumpffutter, weist die Auszugssicherung zusätzlich eine Einrichtung auf, welche ein spielfreies Halten des Werkzeugs mit der Auszugssicherung ermöglicht. Dabei wird durch ein Kraft ausübendes Element, welches bspw. konzentrisch zur Rotationsachse des Werkzeugs am Bohrungsgrund der Werkzeugaufnahme angeordnet ist, das Werkzeug in der Werkzeugaufnahme in Richtung aus dem Werkzeughalter gedrückt. Dadurch liegt die Auszugssicherung spielfrei am Werkzeug. Denn auch ein geringes Spiel zwischen der Auszugssicherung und dem Werkzeug, erlaubt dem Werkzeug eine gewisse Bewegungsfreiheit, die bereits zu Beschädigungen der Werkzeugschneiden führen kann. Insbesondere sind als Kraft ausübendes Element Druckfedern in Form von Spiralfedern, Kegelfedern, Tellerfedern sowie Tellerfederpakete und/oder elastische bzw. gummielastische Elemente möglich.

In einer weiteren und besonders vorteilhaften Ausführungsform für einen Werkzeughalter mit einer Minimalmengenschmierung, weist dieser wenigstens ein Übergabestück für die Minimalmengenschmierung auf, dass zumindest einen, vorzugsweise mehrere Kanäle für den Druckaufbau bzw. Druckausgleich umfasst. Für einen solchen Werkzeughalter mit einem solchen Übergabestück wird ggf. unabhängig von der Auszugssicherung gesondert Schutz begehrt. Das Übergabestück, vorzugsweise in Form eines Rohres, welches sich auch aus mehreren Teilen zusammensetzen kann, ist vorzugsweise mit einem radialen Flansch gebildet und vorzugsweise in einer im Werkzeughalter befindlichen Bohrung beweglich aufgenommen und geführt. Das Rohr, welches zudem auch unterschiedliche Querschnittsprofile aufweisen kann, ist vorzugsweise durch eine Spiralfeder vorgespannt im Werkzeughalter gelagert, wobei der zylindrische Schaft des Rohres vorzugsweise die Spiralfeder durchdringt. Selbstverständlich sind auch andere Kraft ausübende Elemente wie Zugfeder, Kegelfeder, Tellerfeder, und/oder elastische Elemente sowie deren Kombinationen möglich. Die Spiralfeder ist vorzugsweise zwischen dem radialen Flansch des Rohres und bspw. einem Anschlagboden im Werkzeughalter angeordnet, wodurch das Rohr gegenüber dem Werkzeughalter vorgespannt gelagert ist. Das Übergabestück ist vorzugsweise abgedichtet in der Bohrung gelagert. Dabei weist der Werkzeughalter konzentrisch zur Bohrung für das Übergabestück bzw. Rohr bspw. zumindest einen Wellendichtring auf und/oder weitere Dichtungselemente wie Dichtungsringe, Dichtungslippen usw., welche ebenfalls im Werkzeughalter und/oder am Übergabestück bzw. am Rohr selbst angeordnet sein können. Die Kanäle in Form von Durchgangsbohrungen, insbesondere mit kreisförmigen Querschnittsprofil, wobei auch andere Querschnittsprofile möglich sind, sind vorzugsweise im radialen Flansch des Übergabestücks angeordnet, so dass die Durchgangsbohrung im Übergabestück mit der Durchgangsbohrung im radialen Flansch des Übergabestücks verbunden sind. Entlang der zylindrischen Umfangsfläche des radialen Flansches des Übergabestücks ist eine radiale Ausnehmung angeordnet. Darin wird vorzugsweise formschlüssig eine der radialen Ausnehmungen entsprechenden vorzugsweise zylinderflächenabschnittsförmigen Ringmembran eingebettet. Dabei können sowohl die Umfangsflächenausnehmung, insbesondere in Form einer Nut, als auch der vorzugsweise dazu korrespondierende Querschnitt der in der Nut eingebetteten Membran bspw. ein Teilkugelkopfprofil oder andere Profile aufweisen. Die Ringmembran ist vorzugsweise aus einem elastischen Material gebildet, insbesondere aus einem gummielastischem Material, aber auch andere Materialien sind möglich, wie Kohlefasermaterial, Kunststoffe, Teflon und flexible Metalle. Die Kanäle für den Druckausgleich bzw. Druckaufbau sind dabei insbesondere mit der Membran und dem Innenraum des Übergabestücks verbunden. Bei einem Druckaufbau im Werkzeughalter wölbt sich die Membran daher radial auf und legt sich somit an die Umfangsfläche der Aufnahmebohrung des Werkzeughalters an. Dadurch wird das Übergabestück gegen ein axiales Verstellen gesperrt.

Im Folgenden werden Ausführungsbeispiele der Erfindung anhand von Zeichnungen erläutert. Darin zeigt in rein schematischer Darstellung:
- Fig. 1: eine Schnittdarstellung des erfindungsgemäßen Systems mit einem Werkzeughalter mit Schrumpffutter mit separatem noch nicht einge- spannten und mit Sperrnuten versehenen Schaftfräser,
- Fig. 2: eine Schnittdarstellung des erfindungsgemäßen Systems mit Schrumpf- futter und eingespannten erfindungsgemäßen Schaftfräser.
- Fig. 3: eine Schnittdarstellung des erfindungsgemäßen Systems mit Spannzan- genfutter und eingespannten erfindungsgemäßen Schaftfräser.
- Fig. 4: eine Schnittdarstellung des erfindungsgemäßen Systems mit HG-Futter und eingespannten erfindungsgemäßen Schaftfräser.
- Fig. 5: eine Schnittdarstellung des erfindungsgemäßen Systen mit Hydrodehn- spannfutter und eingespannten erfindungsgemäßen Schaftfräser.
- Fig. 6: eine Schnittdarstellung des erfindungsgemäßen Systems mit einge- spanntem erfindungsgemäßen Schaftfräser, wobei das Werkzeug ein Außengewinde aufweist und in ein dazu korrespondierendes Innenge- winde des Werkzeughalters eingeschraubt ist.
- Fig. 7: eine Schnittdarstellung des erfindungsgemäßen Systems mit Kugeln als Sperrelemente, die durch Gewindestifte gesichert sind.
- Fig. 8: eine Schnittdarstellung des erfindungsgemäßen Systems mit Kugeln als Sperrelemente, die durch Gewindestifte gesichert sind, wobei die Kugeln teilweise in den Gewindestiften versenkt sind.
- Fig. 9: eine Schnittdarstellung des erfindungsgemäßen Systems mit Kugeln als Sperrelemente, gesichert mit Zylinderstiften in Presspassung.
- Fig. 10: eine Schnittdarstellung des erfindungsgemäßen Systems mit einteili- gem Sperrelement, welches ein Gewindestift mit kugelförmiger Aus- prägung an einem seiner Stirnseiten ist.
- Fig. 11: eine Schnittdarstellung des erfindungsgemäßen Systems mit einteili- gen Sperrelementen, welche Zylinderstifte mit kugelförmiger Aus- prägung an einen der Stirnseiten sind, in Presspassung.
- Fig. 12: eine Schnittdarstellung des erfindungsgemäßen Systems mit Kugeln in einem separaten Kugelkäfig, daran angrenzend eine Hülse.
- Fig. 13: eine Schnittdarstellung des erfindungsgemäßen Systems mit Kugeln, welche in einem in der Hülse eingearbeiteten Kugelkäfig angeordnet sind, wobei die Hülse eingepresst oder eingeschrumpft ist.
- Fig. 14: eine Schnittdarstellung des erfindungsgemäßen Systems aus Fig. 13, wobei die Hülse mit dem Werkzeughalter verschweißt ist.
- Fig. 15: eine Schnittdarstellung des erfindungsgemäßen Systems aus Fig. 13, wobei die Hülse mit Gewindestiften mit Kegelkuppel mechanisch fixiert ist.
- Fig. 16: eine Schnittdarstellung des erfindungsgemäßen Systems mit geschlit- zer Hülse, welche die Kugeln aufnimmt, und die Hülse mit Sperrnu- ten versehen über weitere Kugeln und Gewindestiften am Werkzeughalter gehalten wird.
- Fig. 17: eine Schnittdarstellung des erfindungsgemäßen Systems mit einer Kegelfeder für eine spielfreie Auszugssicherung.
- Fig. 18: eine Schnittdarstellung des erfindungsgemäßen Systems mit einer Längeneinstellschraube, welche aus gummielastischem Material ge- bildet ist.
- Fig. 19.: eine Schnittdarstellung des erfindungsgemäßen Systems mit einer Längeneinstellschraube, welche darin integriert ein Element aus gummielastischem Material aufweist.
- Fig. 20: eine Schnittdarstellung des erfindungsgemäßen Systems mit einer Minimalmengenschmierung, Kugeln als Sperrelementen und einer Membran aus gummielastischem Material.
- Fig. 21: eine Schnittdarstellung und Seitenansicht aus Fig. 20 des erfindungs- gemäßen Systems mit tangentialer Anordnung der Sperrelemente.
- Fig. 22: eine vergrößerte Darstellung eines Bereichs aus Fig. 20 des erfin- dungsgemäßen Systems mit der Membran und einem Druckkanal im Übergabestück.

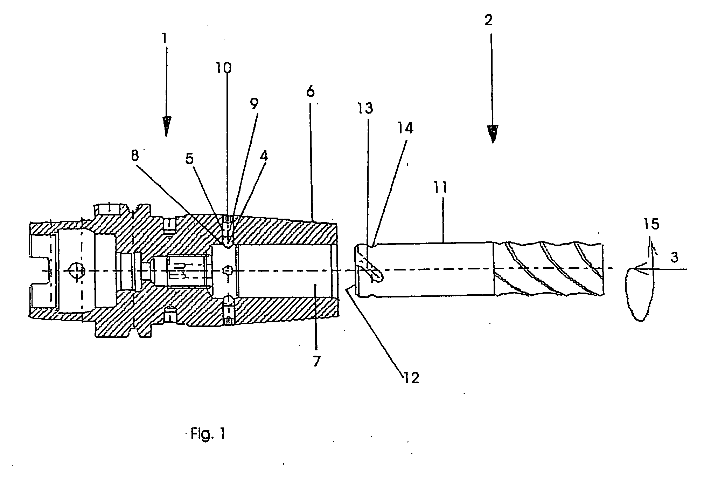

Fig. 1 zeigt schematisch in einer Schnittdarstellung den Werkzeughalter 1 sowie exemplarisch einen Schaftfräser 2, die zueinander bezüglich einer Drehachse 3 angeordnet sind. Der Werkzeughalter 1 weist dabei mindestens zwei, vorzugsweise drei oder vier Kugeln 4 auf. Die Kugel befindet sich dabei in einer Lagerbohrung 5, welche senkrecht zur Drehachse 3 und damit zur Längsachse, im Hülsenabschnitt 6 des Werkzeughalters 1 angeordnet ist. Diese Lagerbohrung 5 ist eine Durchgangsbohrung und erstreckt sich von der Außenseite des Hülsenabschnitts 6 bis zur Innenumfangsfläche Aufnahmeöffnung 7, welche konzentrisch zur Drehachse 3 im

Werkzeughalter 1 angeordnet ist. Die Lagervorderseite 8 der Lagerbohrung 5 ist in Form einer Kugelschalotte und entsprechend der Kugelform der Kugel 4 ausgebildet, so dass die Kugel 4 teilweise in den Innenraum der Aufnahmeöffnung 7 hineinragt. Die Kugel 4 wird durch einen Gewindestift 9 in seiner vorderen Position, also in eine in den Innenraum der Aufnahmeöffnung 7 ragenden Lage gehalten, dabei weist die Lagerbohrung 5 ein zum Außengewinde des Gewindestiftes 9 korrespondierendes Innengewinde auf. Die Länge des Gewindestiftes 9 ragt dabei nicht über die Außenfläche des Hülsenabschnitts 6 hinaus. Der Gewindestift 9 weist dabei einen Innensechskantbuchse 10 auf. Der Schaftfräser 2 weist auf seinem Zylinderschaft 11 in der Nähe der Stirnseite 12 die schraubenförmig angeordneten Sperrnuten 13, 14 auf. Diese haben korrespondierend zur Kugelform der Kugel 4 ein kugelförmiges Profil. Um den Schaftfräser im Werkzeughalter vollständig einzuspannen, muss beim Einführen des Schaftfräsers gemäß Drehrichtung 15 gedreht werden, so dass der Schaftfräser 2 axial schraubenförmig in die Aufnahmeöffnung 7 hineingedreht wird, bis der Schaftfräser 2 einen Anschlag erreicht hat.

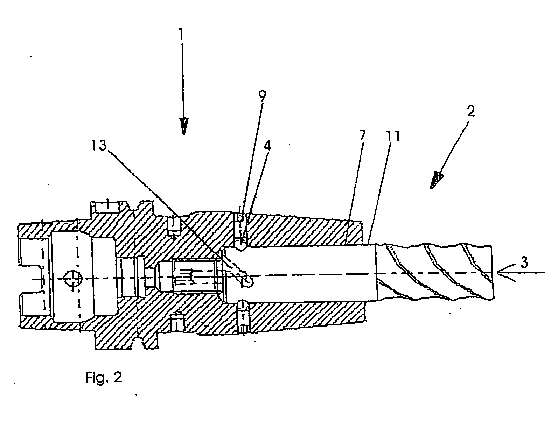

Fig. 2 zeigt rein schematisch in einer Schnittdarstellung den Werkzeughalter 1, in welchem der Schaftfräser 2 vollständig eingespannt ist. Der Schaftfräser 2 befindet sich bis zu seinem Anschlag mit seinem Zylinderschaft 11 in der Aufnahmeöffnung 7. Dabei greift die Kugel 4, gehalten vom Gewindestift 9, in die Sperrnut 13 bzw. 14. In dieser zeichnerischen Schnittdarstellung ist der Zylinderschaft 11 im Presssitz mit der Aufnahmeöffnung 7; d. h. die Induktionsspule (in der Zeichnung nicht gezeigt) ist ausgeschaltet und das Schrumpffutter des Werkzeughalters 1 ist abgekühlt und auf seine ursprüngliche Größe zurückgeschrumpft. Wie in Fig. 2 deutlich zu erkennen ist, kann eine axiale Bewegung des Schaftfräsers 2 entlang der Drehachse 3 nicht durchgeführt werden, da die Kugel 4 in der kugelförmigen Sperrnut 13 bzw. 14 im Zylinderschaft 11 sitzt, so dass eine Bewegung entlang der Drehachse 3 gesperrt ist. Somit wird in dieser Zeichnung das Zusammenwirken zwischen Kugel 4 und Sperrnut 13 bzw. 14 in Form einer Verriegelung deutlich. Zu Entnehme des Schaftfräsers 2 aus dem Werkzeughalter 1 muss lediglich nach Einschalten der Induktionsspule der Schaftfräser 2 entgegen der Drehrichtung 15 (siehe Fig. 1) gedreht und in axialer Richtung entlang der Drehachse 3 aus dem Werkzeughalter 1 hinausgezogen werden.

In den folgenden Figuren sind mögliche Ausführungsformen dargestellt, wie die Auszugssicherung bei weiteren handelsüblichen Spannfuttern ausgebildet ist.

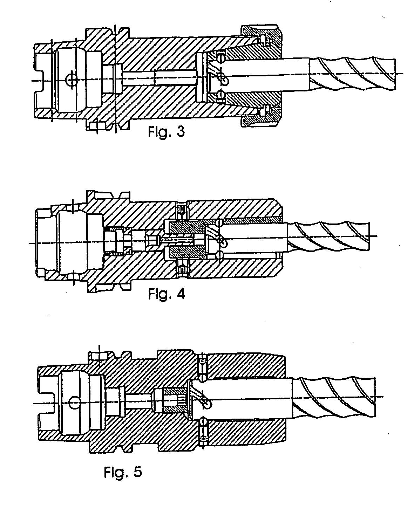

Fig. 3 zeigt in einer schematischen Schnittdarstellung ein gewöhnliches Spannzangenfutter mit Überwurfmutter mit der erfindungsgemäßen Auszugssicherung durch die Sperrnute und Kugeln.
Fig. 4 zeigt ein HG-Futter mit der erfindungsgemäßen Auszugssicherung durch Sperrnute und Kugeln.
Fig. 5 zeigt in rein schematischer Schnittdarstellung ein gewöhnliches Hydrodehnspannfutter mit erfindungsgemäßer Auszugssicherung durch die Sperrnute und Kugeln.

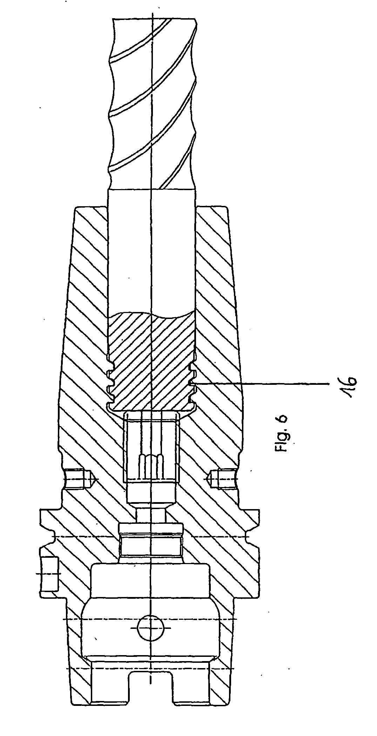

Fig. 6 zeigt in einer rein schematischen Schnittdarstellung einen Werkzeughalter in Form eines Schrumpffutters, wobei der Schaftfräser mit dem Werkzeug über ein Gewinde 16 miteinander verschraubt ist. Aufgrund dieser Verschraubung, welche links steigend bei linksgenutetem Werkzeug und rechts steigend bei rechtsgenutetem Werkzeug ausgebildet ist, wird eine axiale Auszugssicherung des Werkzeugs aus dem Werkzeughalter erreicht.

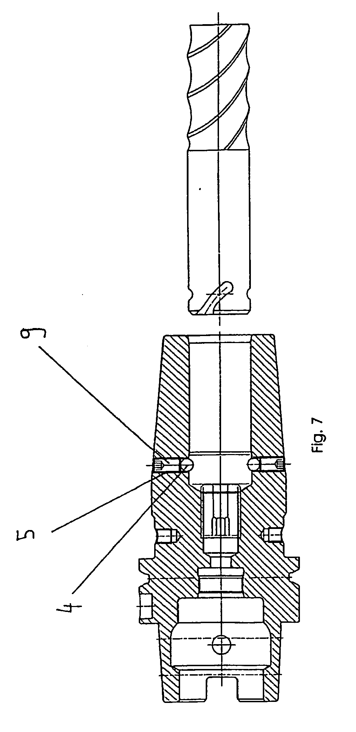

Fig. 7 zeigt in einer rein schematische Schnittdarstellung ein Schrumpffutter mit Sperrelementen in Form von Kugeln 4, welche in den jeweiligen Lagerbohrungen 5 mit Gewindestiften 9 gehalten werden. Der Gewindestift 9 weist dabei eine stumpfe Stirnseite auf.

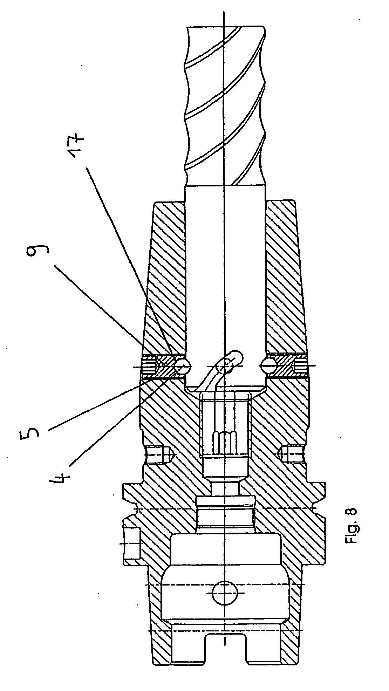

Fig. 8 zeigt in einer rein schematischen Schnittdarstellung ein Schrumpffutter mit Sperrelementen in Form von Kugeln 4, welche in den Lagerbohrungen 5 durch Gewindestifte 9 gehalten werden. Gewindestift 9 weist an der die Kugel 4 aufnehmenden Stirnseite eine Ausnehmung 17 auf. Die Ausnehmung 17 ist in Form einer Sacklochbohrung oder bspw. in Form einer Innensechskantbuchse korrespondierend zum Durchmesser der Kugel gebildet.

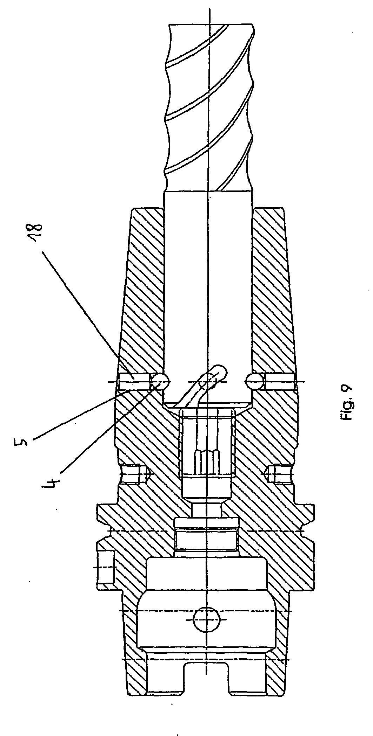

Fig. 9 zeigt in einer rein schematischen Schnittdarstellung ein Schrumpffutter mit Sperrelementen in Form von Kugeln 4, welche in den Lagerbohrungen 5 durch Passstife 18 gehalten werden. Aufgrund der Presspassung zwischen dem Passstift 18 und der Lagerbohrung 5 sind die Sperrelemente in Form von Kugeln 4 in ihrer Lage fixiert.

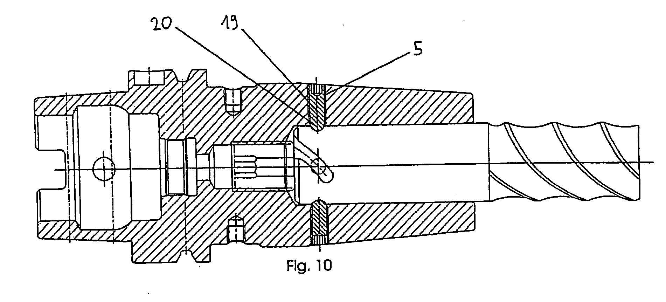

Fig. 10 zeigt in einer rein schematischen Schnittdarstellung ein Schrumpffutter mit einteiligen Sperrelementen 19. Sperrelement 19 ist ein Gewindestift, welcher an einer seiner Stirnseiten einen Halbkugelkopf 20 aufweist.

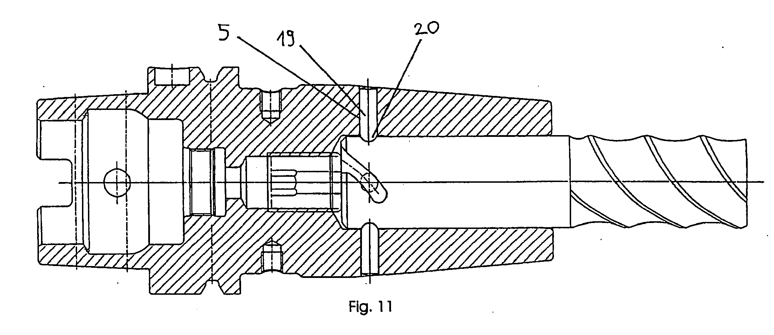

Fig. 11 zeigt in einer rein schematischen Schnittdarstellung ein Schrumpffutter mit einteiligem Sperrelement 19 in den Lagerbohrungen 5. Die einteiligen Sperrelemente 19 sind Passstifte, welche in Presspassung mit dem Schrumpffutter verbunden sind. Die einteiligen Sperrelemente 19 weisen an einer ihrer Stirnseiten einen Halbkugelkopf 20 auf.

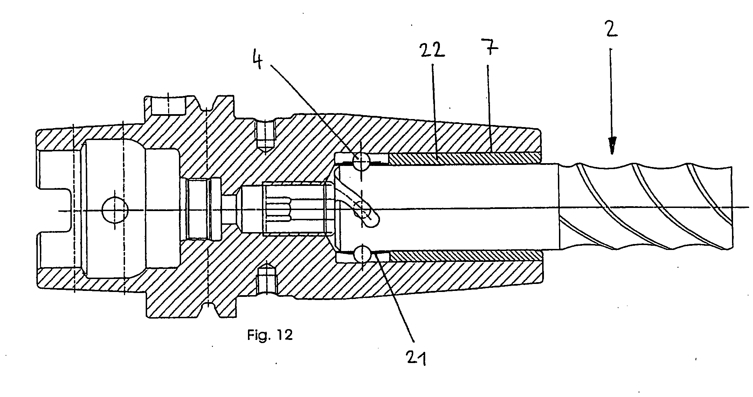

Fig. 12 zeigt in einer rein schematischen Schnittdarstellung ein Schrumpffutter mit Sperrelementen in Form von Kugeln 4. Die Kugeln 4 sind in einem Kugelkäfig 21 gelagert. Dabei ist der Kugelkäfig 21 am Öffnungsgrund der Aufnahmeöffnung 7 angeordnet. Daran angrenzend befindet sich eine Hülse 22. Im Käfig 21 sind die Kugeln 4 eingelassen, die vom Käfig radial nach außen gedrückt werden. Die Kugeln 4 werden dabei an eine Schulter gedrückt, die sich zwischen der Aufnahmeöffnung 7 und einer Freidrehung am Ende der Aufnahmeöffnung 7 befindet. An dieser Schulter können sich die Kugeln 4 axial abstützen. Bei eingeschrumpftem Werkzeug sind die Kugeln 4 auch nach innen abgestützt und können so sowohl das Werkzeug 2 als auch die Hülse 22 gegen einen axialen Auszug sichern.

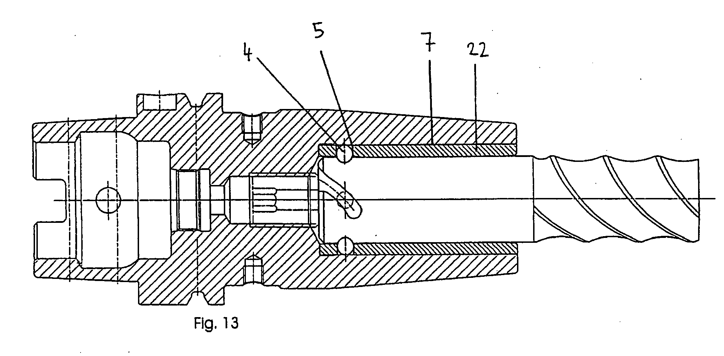

Fig. 13 zeigt in einer rein schematischen Schnittdarstellung ein Schrumpffutter mit den Kugeln 4, welche sich in einer Hülse 22 im linken Abschnitt der Hülse und in der Aufnahmeöffnung 7 befinden. Der linke Abschnitt der Hülse 22 fungiert hierbei als Kugelkäfig für die Kugeln 4. Die Lagerbohrungen 5 für die Kugeln 4 in der Hülse 22 weisen bzgl.
der innen liegenden Zylinderumfangsfläche der Hülse 22 einen kleineren Durchmesser auf,
als der Durchmesser der Kugeln bzw. der Lagerbohrungsdurchmesser. Somit können die Kugeln 4 in den Innenraum hineinragen, jedoch nicht hineinfallen. Die Hülse 22 ist in das Futter entweder eingeschrumpft oder eingepresst.

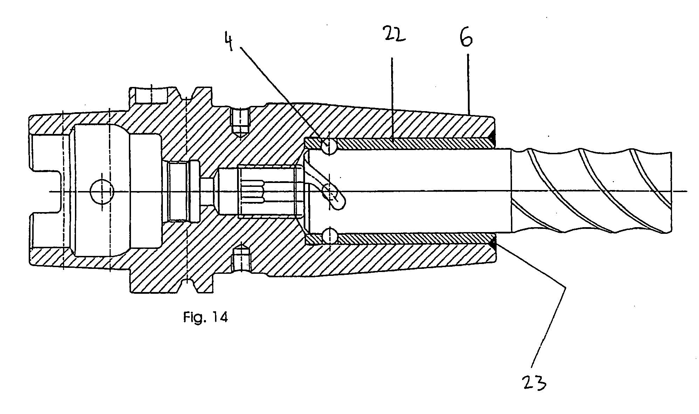

Fig. 14 zeigt in einer reinschematischen Schnittdarstellung ein Schrumpffutter mit Kugeln 4 in einer Hülse 22. Die Hülse 22 ist mit dem Hülsenabschnitt 6 mit einer Schweißnaht 23 verbunden. Die Verschweißung der Hülse 22 mit dem Schrumpffutter kann dabei punktuell, abschnittweise oder ringförmig als geschlossene bspw. Y-Naht ausgebildet sein.

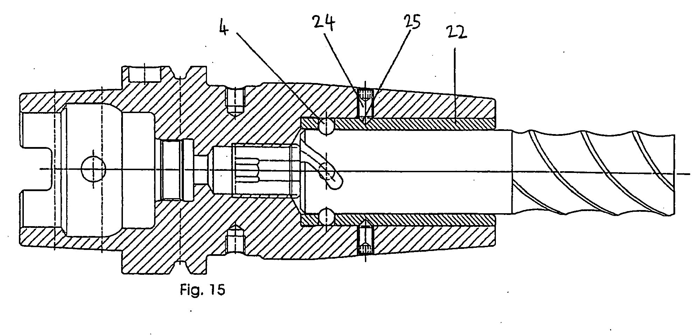

Fig. 15 zeigt in einer rein schematischen Schnittdarstellung ein Schrumpffutter mit Kugeln 4 in einer Hülse 22. In dieser Ausführungsform wird die Hülse 22 über Gewindestifte 24 mit dem Werkzeughalter fixiert. Dabei weisen die Gewindestifte 24 bspw. eine Kegelkuppe auf. Selbstverständlich sind auch andere Ausbildungen, wie bspw. ein Kugelkopf usw.
möglich. Zu der stirnseitigen Ausbildung der Gewindestifte 24 weist die Hülse 22 korrespondierende Vertiefungen 25 auf, welche korrespondieren zur stirnseitigen Kuppenbildung der Gewindestifte 24 gebildet sind. In der vorliegenden Ausführungsform sind diese Vertiefungen 25 kegelförmig gebildet. Zur Fixierung der Hülse 22 am Werkzeughalter ist zumindest ein Gewindestift 24 mit einer stirnseitigen Ausbildung, bspw. in Form eines Kegels notwendig. Vorzugsweise sind drei, besonders bevorzugt vier Gewindestifte zum Fixieren der Hülse 22 am Werkzeughalter angeordnet.

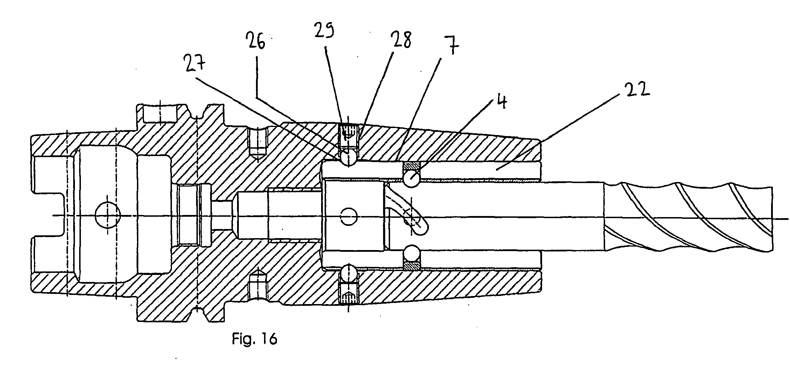

Fig. 16 zeigt in einer rein schematischen Schnittdarstellung ein Schrumpffutter mit den in der Hülse 22 angeordneten Sperrelementen in Form von Kugeln 4. Die Hülse 22 ist dabei dickwandiger ausgebildet, als in den vorhergehenden Figuren. Daher
ist die Hülse 22 geschlitzt (in der Zeichnung nicht dargestellt). In dieser Ausführungsform wird die Hülse 22 ebenfalls durch Kugeln mit dem Werkzeughalter verbunden. Dabei befinden sich im linken Bereich der Hülse 22 zu den Kugeln korrespondierende Sperrnute 27, welche ebenfalls ein Kugelprofil aufweisen. So wie das Werkzeug im Schrumpffutter durch das Zusammenspiel von Sperrelementen und Sperrnuten axial fixiert wird, wird in diesem Fall die Hülse 22 über Kugeln 26 als Sperrelemente mit Sperrnuten 27 in der äußeren Umfangsfläche der Hülse 22 axial fixiert. Die Kugeln 26 befinden sich dabei in Lagerbohrungen 28, welche wiederum Gewindestifte 29 mit einem Gewinde miteinander verbindet. Auch in diesem Fall weist die Lagerbohrung 28 in dem innen liegenden Bereich in Richtung zur Aufnahmeöffnung 7 einen kleineren Durchmesser auf, als der Lagerdurchmesser, welcher dem Kugeldurchmesser der Kugel 26 entspricht. Somit kann die Kugel 26 nicht in den Innenraum hineinfallen, sondern sie ragen hinein.

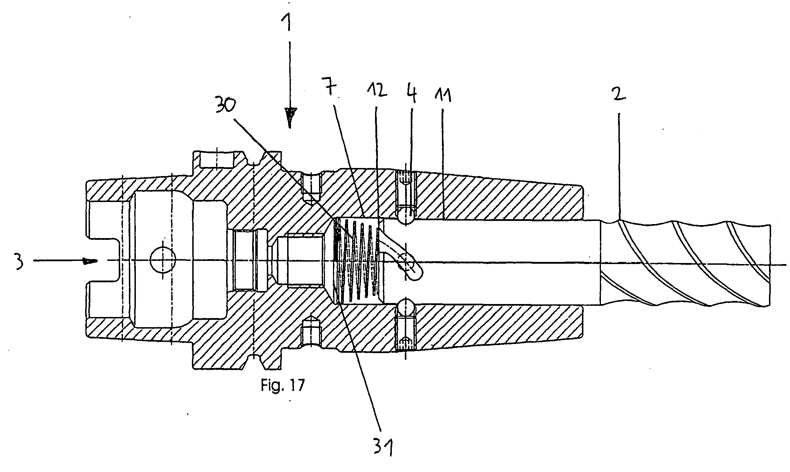

Fig. 17 zeigt in einer rein schematischen Schnittdarstellung ein Schrumpffutter mit einer axialen Auszugssicherung gemäß Fig. 2. Zusätzlich weist der Werkzeughalter eine Kegelfeder 30 auf, welche sich zwischen der Stirnseite 12 des Zylinderschafts 11 des Schaftfräsers 2 und dem Boden 31 der Aufnahmeöffnung 7 befindet. Die Druckfeder in Form einer Kegelfeder 30 drückt dabei auf die Stirnfläche 12 des Schaftfräsers 2 in Richtung der Drehachse 3 aus dem Werkzeughalter 1 hinaus, somit wird ein mögliches Spiel bzw. Fertigungstoleranzen der Sperrnute in der Umfangsfläche des Zylinderschafts 11 und der jeweiligen Lage der Kugeln 4 im Werkzeughalter 1 eliminiert, insofern, dass der Schaftfräser 2 in axialer Richtung durch die Kraft der Kegelfeder 3 zusätzlich gesperrt ist. Somit kann auch ein geringes Spiel zwischen der axialen Auszugssicherung und dem Werkzeug eliminiert werden. Somit läuft man nicht Gefahr, aufgrund von kleinen Fertigungstoleranzen zusätzlich die Werkzeugschneiden während des Betriebs zu schädigen.

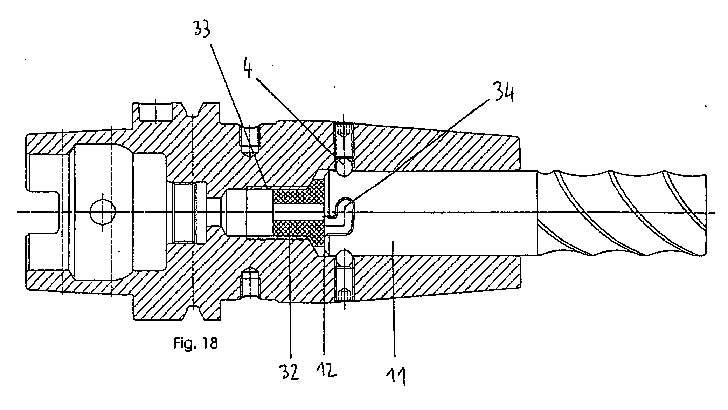

Fig. 18 zeigt in einer rein schematischen Schnittdarstellung ein Schrumpffutter mit den Sperrelementen in Form von Kugeln 4. Hier erfolgt die spielfreie Auszugssicherung des Werkzeugs nach dem Einschrumpfen durch Verwendung einer Längeneinstellschraube 32, welche vorzugsweise aus einem gummielastischen Material
gebildet ist. Zu der Längeneinstellschraube 32 ist im Werkzeughalter korrespondierend ein Innengewinde 33 gebildet. In Fig. 18 ist zusätzlich eine weitere Ausführungsmöglichkeit für den Sperrnutverlauf gezeigt. In dieser Ausführungsform ist die Sperrnut 34 in Form eines "L"'s, beginnend aber der Stirnseite 12 des Zylinderschafts 11, gebildet. Damit ist quasi ein bajonetartiger Sperrverschluss für eine axiale Sperrung als Auszugssicherung des Werkzeugs aus dem Werkzeughalter geschaffen.

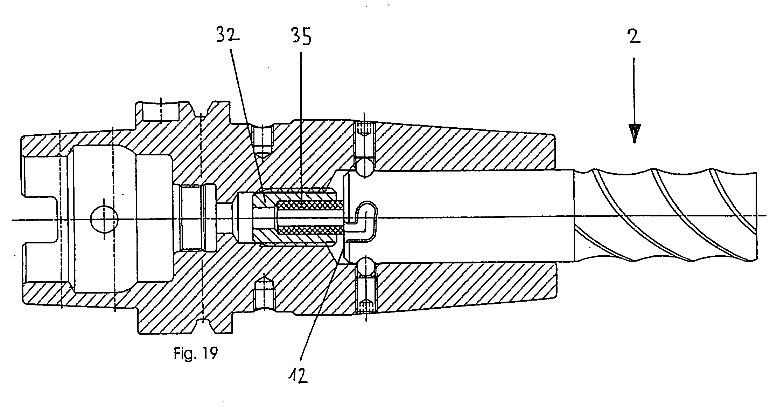

Fig. 19 zeigt in einer rein schematischen Schnittdarstellung ein Schrumpffutter aus Fig. 18, wobei konzentrisch zur Längeneinstellschraube 32 ein darin integriertes elastisches Element 35 angeordnet ist. In diesem Fall ist das elastische Element 35 vorzugsweise aus einem gummielastischen Material gebildet. Die spielfreie Auszugssicherung erfolgt über die Anpresskraft, welche über die Längeneinstellschraube 32 auf das elastische Element 35 über die Stirnseite 12 auf den Schaftfräser 2 ausgeübt wird.

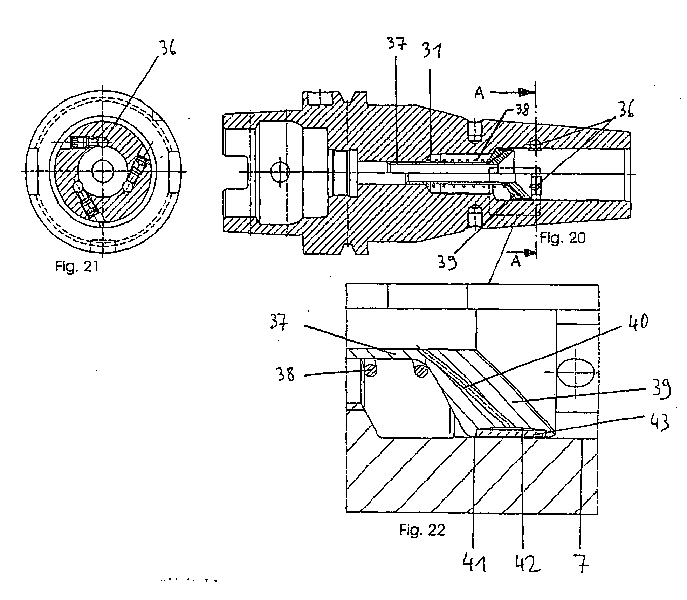

Fig. 20 zeigt in einer rein schematischen Schnittdarstellung ein Schrumpffutter, mit einer Minimalmengenschmierung (MMS). Die axiale Auszugssperre erfolgt über Sperrelemente 36, welche wiederum in Form von Kugeln gebildet sind. Konzentrisch zur Rotationsachse im Inneren des Schrumpffutters, befindet sich ein verschiebbares Rohr 37, welches das Übergabestück für die Minimalmengenschmierung ist. Das Rohr 37 wird aufgrund der Federkraft einer Spiralfeder 38 an den Werkzeugschaft (in der Zeichnung nicht dargestellt) angedrückt. In der Fig. 20 sind zwei mögliche Endlagen des Rohres 37 gezeigt. Die rechts liegende Kontaktfläche des Rohres mit dem Werkzeugschaft ist kegelförmig in Form eines radialen Rohrflansches 39 ausgebildet. Die Spiralfeder 38 wird dabei durch das Rohr 37 konzentrisch durchdrungen. Die Spiralfeder 38 befindet sich zwischen dem Boden 31 und der kegelabschnittsförmigen Umfangsfläche des Rohres 37 am radialen Halsflansch. Fig. 21 zeigt entlang der Schnittlinie A-A aus Fig. 20 in einer rein schematischen Schnittdarstellung die tangentiale Anordnung der Sperrelemente 36 im Werkzeughalter. Fig. 22 zeigt eine Ausschnittsvergrößerung eines Ausschnitts aus Fig. 20, welches mit einer Strichlinie markiert ist. Im radialen Halsflansch 39 des Rohres 37 sind Durchgangsbohrungen 40 angeordnet, welche sich vom Innendurchmesser des Rohres 37 bis zur äußeren Umfangsfläche 41 des radialen Rohrflansches 39 erstrecken. Entlang der zylindrischen Umfangsfläche 41 des radialen Rohrflansches 39 des Rohres 37 ist eine konzentrische zylinderflächenförmige Ausnehmung 42 angeordnet, deren Breite vorzugsweise kleiner als die Breite der Zylinderumfangsfläche 41 des Rohrflansches 39 ist. Korrespondierend zur Ausnehmung 42 ist eine ringförmige zylinderflächenabschnittsförmige Membran 43 angeordnet, welche bündig zur äußeren Zylinderumfangsfläche 41 des Rohrflasches 39 gebildet ist. Die Membran 43 ist dabei vorzugsweise aus einem gummielastischen Material gebildet. Diese Membran 43 entlang der Umfangsfläche 41 dichtet das Rohr 37 gegen die Wand der Aufnahmeöffnung 7 des Schrumpffutters ab. Die Bohrungen 40, welche radial an die Innenseite der Membran 43 führen, leiten den Luftdruck an die Membran 43 weiter, welche somit an die Bohrungswand 7 angedrückt wird. Durch den Druckaufbau wölbt sich die Membran radial auf und legt sich so an die innere Umfangsfläche der Aufnahmeöffnung 7 des Werkzeughalters an. Somit wird das Rohr 37 als Übergabestück für die Minimalmengenschmierung gegen ein axiales Verstellen gesichert. Durch das verschiebbare Rohr 37 kann der Schmiernebel verlustfrei an das Werkzeug geleitet werden.

## Patentansprüche

1. System aus Werkzeughalter und Werkzeug, wobei der Werkzeughalter eine zylindrische Werkzeugaufnahme, vorzugsweise ein Spannfutter aufweist und darin der zylindrische Schaft des Werkzeugs, insbesondere Rotationswerkzeugs aufgenommenen ist, wobei das System eine ein axiales Auswandern des Werkzeugs sperrende Auszugssicherung aufweist, welche mindestens ein Sperrelement und mindestens eine dazu korrespondierende und das Sperrelement aufnehmende Sperrnut umfasst, welche formschlüssig zusammenwirken, wobei das Sperrelement oder die Sperrnut in der Umfangsfläche des Schafts des Werkzeugs angeordnet sind, **dadurch gekennzeichnet, dass**
der Sperrnutverlauf zumindest teilweise aus schrauben- oder kurvenförmigen Zylinderflächenbahnen ausgebildet ist.

2. System nach Anspruch 1,
**dadurch gekennzeichnet, dass**
das Sperrelement zumindest teilkugelkopfartig und die Sperrnut zumindest teilkreisförmig im Querschnitt ausgebildet sind.

3. System nach Anspruch 1 oder 2,
**dadurch gekennzeichnet, dass**
das Werkzeug, insbesondere Rotationswerkzeug, zumindest eine, vorzugsweise zwei, besonders bevorzugt vier Sperrnute aufweist.

4. System nach Anspruch 3,
**dadurch gekennzeichnet, dass**
die Sperrnute von der Stirnseite aus beginnend sich zumindest über einen Teilabschnitt des Schafts erstrecken.

5. System nach einem der vorherigen Ansprüche,
**dadurch gekennzeichnet, dass**
die Anordnung der Sperrelemente im Werkzeughalter und dazu korrespondierend die Anordnung der Sperrnute am Werkzeug zueinander gleichwinklig sind und/oder dass die Sperrelemente im Werkzeughalter in einer Ebene senkrecht zur Drehachse des Werkzeugs angeordnet sind.

6. System nach einem der vorherigen Ansprüche,
**dadurch gekennzeichnet, dass**
die Sperrelemente im Werkzeughalter Kugeln, Stiften, Bolzen und/oder Gewindestifte, die zumindest eine und zumindest teilkugelkopfartige stirnseitige konvexe Ausbildung aufweisen, sind, wobei die Sperrelemente im Werkzeughalter vorzugsweise aus legiertem Edelstahl gebildet sind, wobei vorzugsweise zumindest die Kugeln und/oder der teilkugelkopfartige Bereich der Sperrelemente gehärtet sind.

7. System nach einem der vorherigen Ansprüche,
**dadurch gekennzeichnet, dass**
die Sperrelemente in Lagerbohrungen im Werkzeughalter gelagert werden, wobei sich die Lagerbohrungen vorzugsweise durchgängig von der Außenumfangsfläche bis in den das Werkzeug aufnehmende Innenraum des Werkzeughalters erstrecken, und diese entweder senkrecht zur Rotationsachse des Werkzeughalters gebildet sind und/oder tangential angrenzend an die innere Umfangsfläche des Werkzeug aufnehmenden Innenraums, wobei insbesondere die Sperrelemente in den Lagerbohrungen vorzugsweise durch Gewindestifte und/oder durch Presspassung gehalten werden, und/oder die Sperrelemente mit Außengewinde ausgebildet sind, welche korrespondierend zu in den Lagerbohrungen gebildeten Innengewinden ausgebildet sind.

8. System nach Anspruch 7,
**dadurch gekennzeichnet, dass**
die Sperrelemente in ihrer gelagerten Position in den Lagerbohrungen mit der Kugelkopfartigen Ausbildung in den Innenraum des das Werkzeug aufnehmenden Werkzeughalters zumindest teilweise hineinragen.

9. System nach einem der vorherigen Ansprüche,
**dadurch gekennzeichnet, dass**
die Sperrelemente Kugeln sind, die in Werkzeughaltern, insbesondere Schrumpffuttern, in zumindest einem Kugelkäfig gelagert werden, wobei die Lagerbohrungen für die Kugeln des Kugelkäfigs bezüglich der Innenseite einen kleineren Durchmesser aufweisen, als der Lagerbohrungsdurchmesser, wobei der Werkzeughalter bevorzugt zumindest ein Kugelkäfig im Innenraum des Werkzeughalters aufweist, wobei der Kugelkäfig als separates Bauteil, in einer Hülse eingearbeitet oder eine ein Kugelkäfig aufweisende Hülse ist, wobei die Hülse eingepresst, eingeschrumpft, mit der Werkzeughalter verschweißt, mit Gewindestiften formschlüssig gehalten und/oder mit Sperrelementen und Sperrnuten an der Hülse, fixiert wird.

10. System nach einem der vorhergehenden Ansprüche,
**dadurch gekennzeichnet, dass**
das Werkzeug mit der Auszugsicherung, insbesondere bei Schrumpffuttern, axial spielfrei durch kraftausübende Elemente gehalten wird, insbesondere mit zumindest einer Druckfeder, Kegelfeder, Schraubenfeder, Tellerfeder sowie Federpakete, und/oder gummielastische Elemente.

11. System nach Anspruch 10,
**dadurch gekennzeichnet, dass**
das Werkzeug mit der Auszugsicherung, insbesondere bei Futtern mit Minimalmengenschmierung, axial spielfrei gehalten wird, wobei das Übergabestück für die Minimalschmierung zumindest eine Durchgangsbohrung im kegelförmigen radialen Flanschbereich aufweist, der radiale Flansch des Übergabestücks entlang seiner zylindrischen Umfangsfläche eine radiale Ausnehmung aufweist, worin dazu korrespondierend eine zylinderflächenabschnittförmige Ringmembran vorzugsweiseformschlüssig und bündig eingebettet anliegt, vorzugsweise aus gummielastischen Material gebildet, wobei sich die Durchgangsbohrungen radial vom Innenraum des Übergabestücks an die Membran erstrecken.

12. System nach einem der vorhergehenden Ansprüche,
**dadurch gekennzeichnet, dass**
der Sperrnutverlauf auf dem Schaft des Werkzeugs bei linksgenutetem Werkzeug linkssteigend und bei rechtsgenutetem Werkzeug rechtssteigend gebildet ist.

13. System nach einem der vorhergehenden Ansprüche,
**dadurch gekennzeichnet, dass**
der Schaft des Werkzeugs endseitig ein Außengewinde aufweist, wobei bei linksgenutetem Werkzeug das Außengewinde linkssteigend und bei rechtsgenutetem Werkzeug das Außengewinde rechtssteigend gebildet ist, und der Werkzeughalter ein dazu korrespondierendes Innengewinde aufweist.

14. Werkzeughalter zur Verwendung in einem System nach einem der vorhergehenden Ansprüche,
**dadurch gekennzeichnet, dass**
der Werkzeughalter die den Werkzeughalter betreffenden Merkmale eines oder mehrerer der vorherigen Ansprüche aufweist.

15. Werkzeug zur Verwendung in einem System nach einem der Ansprüche 1 bis 13,
**dadurch gekennzeichnet, dass**
das Werkzeug die das Werkzeug betreffenden Merkmale eines oder mehrerer der Ansprüche 1 bis 13 aufweist.

## Claims

1. A system comprising a tool holder and a tool, wherein the tool holder comprises a cylindrical tool holding fixture, preferably a clamping chuck, and the cylindrical tool shaft, in particular of the rotation tool, is received therein, wherein the system comprises a pullout preventer locking the tool against an axial migration out of the tool holder, wherein the pullout preventer comprises at least one locking element and at least one locking groove which corresponds thereto and receives the locking element, which interact in a form locking manner, wherein said locking element or the locking groove are disposed in the circumferential surface of the tool shaft, **characterized in that** the path of the locking groove is formed at least partially with helical or curved cylindrical surface paths.

2. A system according to claim 1, **characterized in that** with respect to its cross section the locking element is at least partially configured ball head shaped and the locking groove is at least partially configured divided circle shaped.

3. A system according to claims 1 or 2, **characterized in that** the tool, in particular the rotation tool, comprise at least one, preferably two, in particular preferably four locking grooves.

4. A system according to claim 3, **characterized in that** the locking grooves beginning at the face extend over at least a partial section of the shaft.

5. A system according to one of the preceding claims, **characterized in that** the assembly of the locking elements in the tool holder and corresponding thereto, the configuration of the locking grooves in the tool are disposed at the same angle, and/or the locking elements are disposed in the tool holder in a plane perpendicular to the rotation axis of the tool.

6. A system according to one of the preceding claims, **characterized in that** the locking elements in the tool holder are balls, pins, bolts, and/or threaded pins, which comprise at least one and at least a partially ball shaped convex face configuration, wherein the locking elements in the tool holder preferably are made of stainless steel alloy, where preferably at least the balls and/or the partially ball head shaped portions of the locking elements are hardened.

7. A system according to one of the preceding claims, **characterized in that** the locking elements are supported in the support bore holes in the tool holder, wherein the support bore holes preferably extend continuously from the outer circumferential surface into the inner cavity of the tool holder receiving the tool, and wherein they are either configured perpendicular to the rotation axis of the tool holder and/or tangentially adjacent to the inner circumferential surface of the inner cavity receiving the tool, wherein in particular the locking elements are held in the support bore holes, preferably by threaded pins and/or by a press fit and/or the locking elements are configured with an exterior threads, which are configured corresponding to the inner threads configured in the support bore holes.

8. A system according to claim 7, **characterized in that** the locking elements in their supported position in the support bore holes reach with the ball head shaped configuration at least partially into the interior cavity of the tool holder receiving the tool.

9. A system according to one of the preceding claims, **characterized in that** the locking elements are balls, which are held in tool holders, in particular in shrink fit chucks, in at least one ball retainer, wherein the support bore holes for the balls of the ball retainer comprise a smaller diameter with reference to the inside than the support bore hole diameter, wherein the tool holder comprises at least one ball retainer in the interior of the tool holder, wherein the ball retainer is a separate component, is machined into a sleeve, or is a sleeve comprising a ball retainer, wherein the sleeve is pressed in, shrunk in, welded to the tool holder, held by threaded pins in an interlocking manner, and/or fixated at the sleeve by locking elements and locking grooves.

10. A system according to one of the preceding claims, **characterized in that** the tool is held by the pullout preventer, in particular in shrink fit tools, is axially held without clearance by force imparting elements, in particular by at least one compression spring, conical spring, coil spring, disk spring, and spring packets, and/or rubber elastic elements.

11. A system according to claim 10, **characterized in that** the tool is held by the pullout preventer, in particular in chucks with minimum volume lubrication, without clearance in axial direction, wherein the transfer piece for the minimum volume lubrication comprises at least one pass-through bore hole in the conical radial flange portion, the radial flange of the transfer piece comprises a radial recess along its cylindrical enveloping surface, wherein corresponding thereto, a cylinder enveloping surface section shaped annular membrane is embedded preferably in a form locking and flush manner, so that it touches, preferably configured from rubber elastic material, wherein the pass-through bore holes extend radially from the inner cavity of the transfer piece to the membrane.

12. A system according to one of the preceding claims, **characterized in that** the locking groove path has a left pitch direction for a tool with a left groove, and a right pitch direction for a tool with a right groove.

13. A system according to one of the preceding claims, **characterized in that** the shaft of the tool comprises an outer thread at its end, wherein the outer thread has a left pitch direction for a tool with a left groove, and the outer thread has a right pitch direction for a tool with a right groove, wherein the tool holder comprises an inner thread corresponding thereto.

14. A tool holder for use in a system according to one of the preceding claims, **characterized in that** the tool holder comprises the features of one or plural of the preceding claims relating to the tool holder.

15. A tool for use in a system according to one the claims 1 through 13, **characterized in that** the tool comprises the features of one or plural of the claims 1 through 13 relating to the tool.

## Revendications

1. Système composé d'un porte-outils et d'un outil, le porte-outils présentant un logement d'outil cylindrique, de préférence un mandrin de serrage, et la queue cylindrique de l'outil, en particulier de l'outil rotatif, y étant logée, le système présentant une sécurité anti-extraction qui bloque une dérive axiale de l'outil et qui comprend au moins un élément de blocage et au moins une rainure de blocage, qui lui correspond et qui loge l'élément de blocage, qui coopèrent en liaison de forme, l'élément de blocage ou la rainure de blocage étant disposés dans la surface circonférentielle de la queue de l'outil, **caractérisé en ce que**
le tracé de la rainure de blocage est au moins partiellement constitué de trajectoires de surface cylindrique en forme d'hélice ou de courbe.

2. Système selon la revendication 1,
**caractérisé en ce que**
l'élément de blocage est constitué au moins à la façon d'une tête partiellement sphérique, et **en ce que** la rainure de blocage est constituée au moins en forme de cercle partiel en section transversale.

3. Système selon la revendication 1 ou 2,
**caractérisé en ce que**
l'outil, en particulier l'outil rotatif, présente au moins une, de préférence deux, de façon particulièrement préférée quatre rainures de blocage.

4. Système selon la revendication 3,
**caractérisé en ce que**
les rainures de blocage, en partant du côté frontal, s'étendent au moins sur un tronçon partiel de la queue.

5. Système selon l'une des revendications précédentes,
**caractérisé en ce que**
la disposition des éléments de blocage dans le porte-outils et, de façon correspondante, la disposition des rainures de blocage sur l'outil sont effectuées selon le même angle l'une par rapport à l'autre et/ou **en ce que** les éléments de blocage dans le porte-outils sont disposés dans un plan perpendiculairement à l'axe de rotation de l'outil.

6. Système selon l'une des revendications précédentes,
**caractérisé en ce que**
les éléments de blocage dans le porte-outils sont des billes, des broches, des boulons et/ou des goujons filetés qui présentent au moins une configuration convexe côté frontal du type à tête partiellement sphérique, les éléments de blocage dans le porte-outils étant constitués de préférence en acier fin allié, de préférence au moins les billes et/ou la zone du type à tête partiellement sphérique des éléments de blocage étant durcies.

7. Système selon l'une des revendications précédentes,
**caractérisé en ce que**
les éléments de blocage sont supportés dans des alésages de support dans le porte-outils, les alésages de support s'étendant de préférence de façon continue depuis la surface circonférentielle extérieure jusque dans l'espace intérieur, logeant l'outil, du porte-outils, et ces alésages de support sont formés perpendiculairement à l'axe de rotation du porte-outils et/ou de façon tangentiellement contiguë à la surface circonférentielle intérieure de l'espace intérieur logeant l'outil, en particulier les éléments de blocage étant retenus dans les alésages de support de préférence par des goujons filetés et/ou par ajustage serré, et/ou les éléments de blocage étant réalisés avec des filets extérieurs qui sont constitués de façon correspondante aux filets intérieurs formés dans les alésages de support.

8. Système selon la revendication 7,
**caractérisé en ce que**
les éléments de blocage, dans leur position supportée dans les alésages de support avec la configuration du type à tête sphérique, dépassent au moins partiellement dans l'espace intérieur du porte-outils logeant l'outil.

9. Système selon l'une des revendications précédentes,
**caractérisé en ce que**
les éléments de blocage sont des billes qui sont supportées dans des porte-outils, en particulier dans des mandrins de frettage, dans au moins une cage à billes, les alésages de support pour les billes de la cage à billes présentant, en ce qui concerne le côté intérieur, un diamètre plus petit que le diamètre d'alésage de support, le porte-outils présentant de préférence au moins une cage à billes dans l'espace intérieur du porte-outils, la cage à billes étant intégrée en tant que composant séparé dans une douille, ou étant une douille présentant une cage à billes, la douille étant pressée, frettée, soudée avec le porte-outils, retenue par liaison de forme avec des goujons filetés et/ou étant fixée avec des éléments de blocage et des rainures de blocage sur la douille.

10. Système selon l'une des revendications précédentes,
**caractérisé en ce que**
l'outil avec la sécurité anti-extraction, en particulier dans le cas de mandrins de frettage, est retenu sans jeu axialement par des éléments exerçant une force, en particulier avec au moins un ressort de pression, un ressort conique, un ressort hélicoïdal, une rondelle Belleville ainsi que des paquets de ressorts, et/ou des éléments élastiques à la façon du caoutchouc.

11. Système selon la revendication 10,
**caractérisé en ce que**
l'outil avec la sécurité anti-extraction, en particulier dans le cas de mandrins avec lubrification à débit minimal, est retenu sans jeu axialement, la pièce de transfert pour la lubrification minimale présentant au moins un alésage débouchant dans la zone de bride radiale de forme conique, la bride radiale de la pièce de transfert présentant le long de sa surface circonférentielle cylindrique un creux radial dans lequel, de façon correspondante, une membrane annulaire en forme de tronçon de surface circonférentielle est ajustée de façon noyée de préférence en liaison de forme et en affleurement, formée de préférence en matériau élastique à la façon du caoutchouc, les alésages débouchants s'étendant radialement depuis l'espace intérieur de la pièce de transfert vers la membrane.

12. Système selon l'une des revendications précédentes,
**caractérisé en ce que**
le tracé de rainure de blocage est formé sur la queue de l'outil avec pas à gauche en cas d'outil rainuré à gauche, et avec pas à droite en cas d'outil rainuré à droite.

13. Système selon l'une des revendications précédentes,
**caractérisé en ce que**
la queue de l'outil présente côté extrémité un filet extérieur, le filet extérieur étant formé avec pas à gauche en cas d'outil rainuré à gauche, et le filet extérieur étant formé avec pas à droite en cas d'outil rainuré à droite, et le porte-outils présentant un filet intérieur correspondant.

14. Porte-outils pour une utilisation dans un système selon l'une des revendications précédentes,
**caractérisé en ce que**
le porte-outils présente les caractéristiques, concernant le porte-outils, d'une ou de plusieurs des revendications précédentes.

15. Outil pour une utilisation dans un système selon l'une des revendications 1 à 13,
**caractérisé en ce que**
l'outil présente les caractéristiques, concernant l'outil, d'une ou de plusieurs des revendications 1 à 13.
